(19) **Europäisches Patentamt / European Patent Office / Office européen des brevets**

(11) **EP 3 343 451 B1**

(12) **FASCICULE DE BREVET EUROPEEN**

(45) Date de publication et mention de la délivrance du brevet:
**21.09.2022 Bulletin 2022/38**

(21) Numéro de dépôt: **16207336.5**

(22) Date de dépôt: **29.12.2016**

(51) Classification Internationale des Brevets (IPC):
**G04R 20/26** (2013.01)  **G04R 60/06** (2013.01)
**H04B 5/00** (2006.01)  **H04B 5/02** (2006.01)
**G06K 19/073** (2006.01)  **G04G 21/04** (2013.01)
**G06K 19/077** (2006.01)

(52) Classification Coopérative des Brevets (CPC):
**G04G 21/04; G04R 60/06; G06K 19/07345;**
**G06K 19/07762; H04B 5/0025; H04B 5/02;**
G04R 20/26

(54) **OBJET PORTABLE COMPORTANT UN DISPOSITIF DE CONNEXION EN CHAMP PROCHE**

TRAGBARER GEGENSTAND, DER EINE NAHFELDVERBINDUNGSVORRICHTUNG UMFASST

PORTABLE OBJECT COMPRISING A NEAR-FIELD CONNECTION DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**04.07.2018 Bulletin 2018/27**

(73) Titulaire: **The Swatch Group Research and Development Ltd**
**2074 Marin (CH)**

(72) Inventeurs:
• **Vuille, Pierry**
**2338 Les Emibois (CH)**

• **Martin, Jean-Claude**
**2037 Montmollin (CH)**
• **Willemin, Michel**
**2515 Prêles (CH)**
• **Scordilis, Thierry**
**2036 Cormondrèche (CH)**

(74) Mandataire: **ICB SA**
**Faubourg de l'Hôpital, 3**
**2001 Neuchâtel (CH)**

(56) Documents cités:
**EP-A1- 1 876 556**   **WO-A1-2011/067543**
**US-A1- 2007 152 828**   **US-B1- 6 685 096**

## Description

DOMAINE TECHNIQUE

La présente invention se rapporte au domaine des microtechniques. Elle concerne plus particulièrement un objet portable comportant un dispositif de connexion en champ proche.

ART ANTERIEUR

Il est connu de réaliser des objets portables incorporant des moyens de communication en champ proche par exemple à l'aide d'une étiquette radiofréquence. Ces moyens de connexion sont composés d'une puce électronique, ou circuit intégré, reliée électriquement à une antenne. La plupart du temps, ces dispositifs n'ont pas besoin d'une alimentation électrique autonome et sont destinés à communiquer automatiquement avec un lecteur dès qu'ils s'en approchent. Le champ électromagnétique du lecteur génère un courant induit dans l'antenne qui alimente la puce et lui permet d'émettre à son tour un signal via l'antenne.

On trouve couramment de tels dispositifs dans les cartes à puces qui permettent d'effectuer des paiements sans contact aux bornes prévues à cet effet. On connait également les demandes EP 603 721, EP 974 878, CH 690 525 ou CH 704 583 qui décrivent des montres comportant des moyens de communication en champ proche dans lesquelles les antennes sont dissimulées à différents endroits de la montre comme le cadran, la carrure, la lunette, le joint de glace ou la glace. D'autres configurations prévoient de loger l'antenne dans le fond, le mouvement ou encore le bracelet. L'intégration de ces dispositifs de communication sans contact dans une montre permet de nombreuses applications comme la réalisation d'opérations d'information, d'identification, de verrouillage, de contrôle d'accès ou de paiement.

Cependant, ces dispositifs de communication automatique présentent une grande vulnérabilité vis-à-vis de tiers malintentionnés qui pourraient, en approchant un émetteur récepteur, récupérer à l'insu de leurs propriétaires, des informations confidentielles ou faire exécuter des virements bancaires à leur profit. Différentes parades ont été développées pour sécuriser les dispositifs de communication en champ proche. Les cartes de paiement peuvent ainsi être placées dans des étuis blindés qui agissent comme une cage de Faraday et empêchent la communication de s'établir. La demande US 2016/0188925 décrit un procédé pour activer ou désactiver une étiquette radiofréquence possédant un interrupteur électronique à l'aide d'un lecteur auxiliaire approprié. L'opération de déverrouillage électronique peut s'avérer fastidieuse et peu pratique puisqu'elle nécessite de manipuler un autre objet que celui par lequel s'établit la communication. De surcroit, elle présente une faille de sécurité car le dispositif de communication en champ proche reste vulnérable entre le moment où il est activé et celui où la communication s'établit. Les différentes méthodes de sécurisation connues sont inadaptées à certains objets portables comme une montre bracelet, sont peu pratiques et ne permettent pas d'éliminer totalement les risques de piratage.

Le brevet US 6,685,096 B1 décrit un transpondeur en liaison avec un système de communication. Le transpondeur comprend des moyens pour modifier la distance de communication entre le transpondeur et un lecteur dépendant de l'application sélectionnée ou activée. Chaque application est associée à un code déterminant l'ouverture ou la fermeture d'un interrupteur dans le transpondeur, ce qui permet également de modifier la distance de communication en fonction de l'état de l'interrupteur. Ce transpondeur n'est pas monté dans une montre.

La demande de brevet WO 2011/067543 A1 décrit un dispositif sous forme de carte RFID. Le dispositif comprend une antenne principale pour capter et émettre un signal RF, une puce électronique ayant des informations et configurée pour transmettre ces informations par l'antenne en réponse à un signal RF externe, un mécanisme d'activation et de désactivation de l'antenne, un circuit de détection de présence du signal RF externe, un circuit indicateur lié au circuit de détection. Cette carte RFID n'est pas montée dans une montre.

La demande de brevet EP 1 876 556 A1 décrit un transpondeur RFID lié à un dispositif, pour communiquer avec un lecteur par des signaux RF, une fois qu'un signal d'interrogation du lecteur est reçu par le transpondeur. Le transpondeur peut être activé pour la transmission de signaux RF ou désactiver pour ne rien transmettre. Ce transpondeur n'est pas monté dans une montre.

RESUME DE L'INVENTION

La présente invention a pour but de proposer un moyen pour sécuriser un dispositif de communication en champ proche intégré à un objet portable qui soit facile à utiliser et plus sûr que les solutions de l'art antérieur.

De façon plus précise, l'invention concerne un objet portable selon les revendications indépendantes 1 et 2.

Cet agencement permet de sécuriser un dispositif de communication en champ proche intégré dans une montre tout en simplifiant les opérations nécessaires à cette sécurisation.

Selon une variante avantageuse de l'invention, le circuit électrique comporte un pont portant un condensateur parallèle à l'antenne.

Selon une autre variante avantageuse de l'invention, l'antenne et le pont sont connectés aux bornes de la puce électronique.

Selon une autre variante avantageuse de l'invention, la branche de dérivation est connectée aux bornes de la puce électronique.

Selon une autre variante avantageuse de l'invention, le pont comporte un deuxième composant monté en série avec le condensateur et la branche de dérivation est connectée entre les deux composants du pont et sur une borne de la puce électronique.

Selon une autre variante avantageuse de l'invention, le deuxième composant est un condensateur ou une inductance.

Selon une autre variante avantageuse de l'invention, la branche de dérivation comporte un composant monté en série avec l'interrupteur, le composant étant un condensateur, une inductance ou une résistance.

Selon une autre variante avantageuse de l'invention, une inductance est montée entre une borne de la puce électronique et le condensateur et la branche de dérivation est montée parallèle à l'inductance.

Selon une autre variante avantageuse de l'invention, l'interrupteur mécanique est un interrupteur Reed et l'objet portable comporte un aimant permanent mobile en référence à l'interrupteur Reed et apte à modifier l'état de l'interrupteur Reed en réponse à un déplacement de l'organe de commande.

Selon une autre variante avantageuse de l'invention, la montre comporte un interrupteur de sécurité agencé pour changer d'état simultanément avec l'interrupteur Reed en présence d'un champ magnétique extérieur.

Selon une variante avantageuse de l'invention, la montre comporte un moyen de rappel élastique agencé pour ramener automatiquement l'organe de commande de la position active vers la position passive.

## BREVE DESCRIPTION DES FIGURES

D'autres détails de l'invention apparaîtront plus clairement à la lecture de la description qui suit, faite en référence aux dessins annexés dans lesquels :

- les figures 1 à 7 représentent différents schémas de principe d'un dispositif de communication d'une montre selon l'invention,
- la figure 8 représente un diagramme du gain de l'antenne, donc de sa performance, en fonction de la fréquence d'un dispositif de communication selon l'invention,
- les figures 9 et 10 représentent une vue en coupe de la branche de dérivation et d'un interrupteur, respectivement dans les positions ouverte et fermée.

## DESCRIPTION DETAILLEE

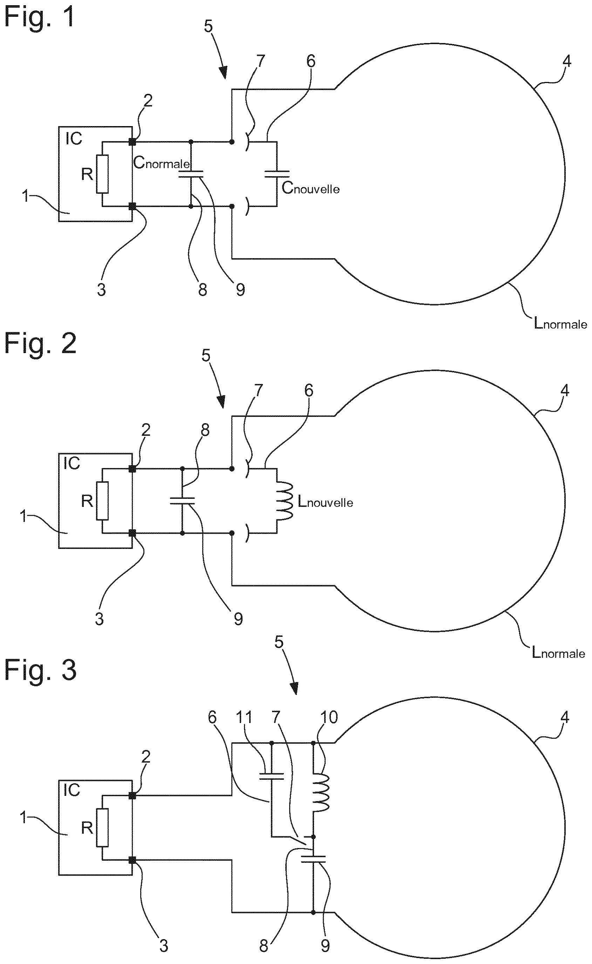

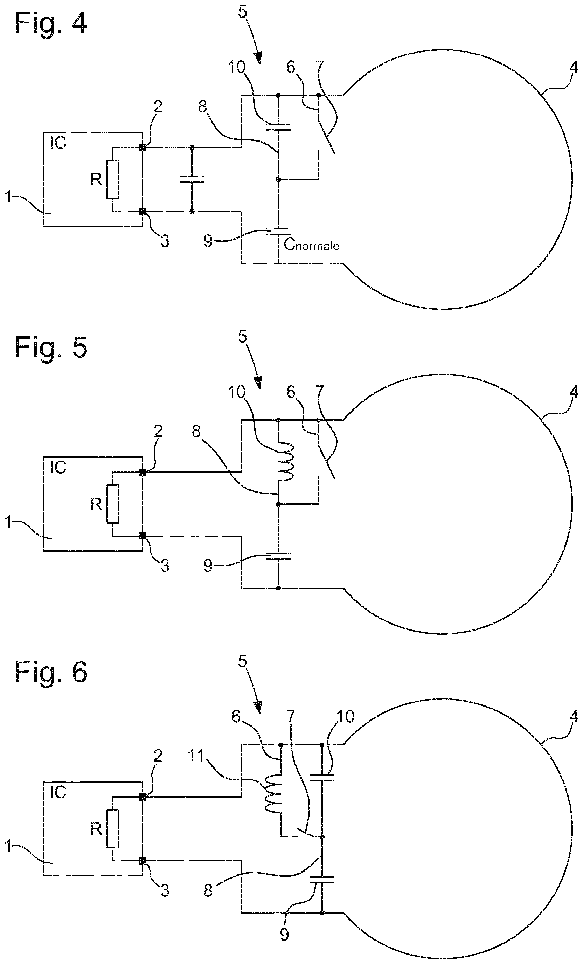

Les figures 1 à 7 représentent des schémas de principe du dispositif de communication en champ proche sécurisé que l'invention propose d'intégrer dans des montres. Le dispositif de communication comporte une puce électronique 1 munie de deux bornes 2, 3 connectées à un circuit électrique comportant une antenne 4 et un filtre 5, typiquement un filtre-passe bande. Le dispositif de communication en champ proche est agencé pour recevoir et émettre à une fréquence définie correspondant à la fréquence de résonance du circuit électrique qui est également la fréquence de fonctionnement du lecteur avec lequel l'objet portable est destiné à communiquer. La fréquence de résonance de l'antenne est adaptée afin d'avoir les meilleures performances (gain) dans la bande de fréquences utiles, et donc de permettre de recevoir et émettre de manière contrôlée et selon les standards RFID en vigueur. Le circuit électrique comporte une branche de dérivation 6 munie d'un interrupteur 7 apte à commuter entre un état ouvert et un état fermé. L'interrupteur 7 est commandé par le déplacement d'un organe de commande que comporte l'objet portable. L'organe de commande est apte à être déplacé entre deux positions prédéfinies, à savoir une position active dans laquelle le dispositif de communication est activé et une position passive dans laquelle le dispositif de communication est désactivé. Le déplacement de l'organe de commande de l'une à l'autre de ses positions prédéfinies provoque la commutation de l'interrupteur 7 et modifie la fréquence de résonance du circuit électrique et donc son aptitude à communiquer avec un lecteur cible.

Dans tous les exemples présentés, le filtre comporte un pont 8 monté en parallèle avec l'antenne 4. Il est aussi possible que ce pont soit monté en série, et que les autres composants soient également placés de manière de manière duale pour obtenir des effets similaires, sans sortir du domaine de l'invention. Seuls les cas avec un pont en parallèle seront traités à titre d'exemple dans la suite de la description.

Dans les exemples des figures 1 et 2, le pont comporte uniquement un condensateur 9, l'antenne 4 et le condensateur 9 étant reliés aux bornes de la puce électronique 1. La branche de dérivation 6 est également connectée aux bornes 2, 3 de la puce électronique 1, si l'interrupteur 7 est en position fermée.

Dans les exemples des figures 3 à 6 le pont comporte un deuxième composant 10 en plus du condensateur 9 qui peut notamment être une inductance ou un deuxième condensateur. Dans ce cas la branche de dérivation 6 est connectée en parallèle du deuxième composant 10, d'un côté à une borne 2 de la puce électronique 1 et de l'autre entre les deux composants du pont 8.

La branche de dérivation 6 peut également comporter un composant 11 monté en série avec l'interrupteur 7, ce composant 11 pouvant être un condensateur, une inductance ou une résistance.

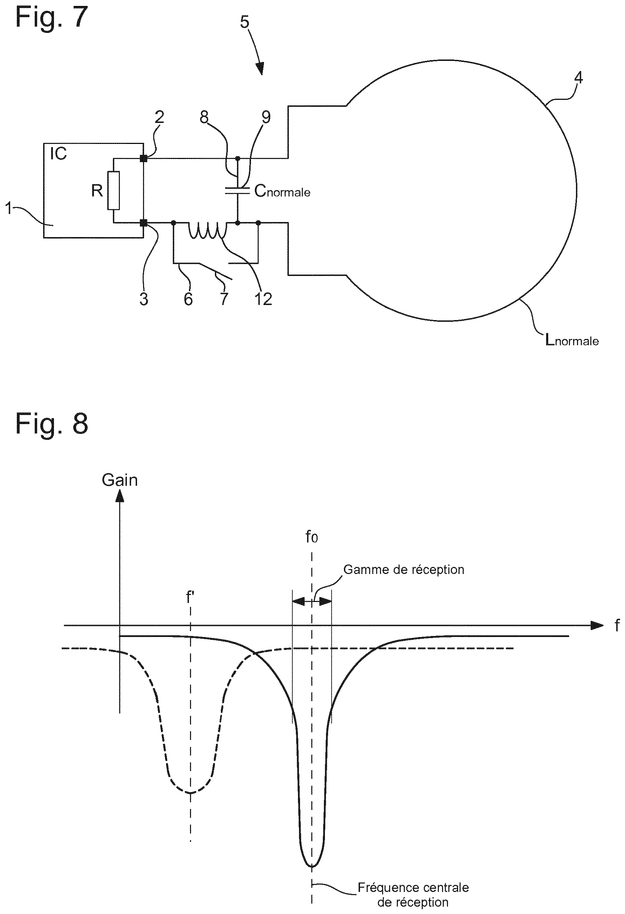

Dans l'exemple présenté à la figure 7, une inductance 12 est montée entre une borne 3 de la puce électronique 1 et le condensateur 9 et la branche de dérivation 6 est montée parallèle à l'inductance 12.

L'homme du métier saura créer un grand nombre de variantes à partir des exemples proposés en combinant les différentes alternatives proposées entre elles.

Le diagramme de la figure 8 représente le gain de l'antenne du dispositif de communication en fonction de la fréquence dans le cas d'un circuit avec un filtre passe-bande. La fréquence centrale de réception de la bande passante est la fréquence de résonance fo du circuit électrique. La fréquence d'émission du lecteur se situe dans la bande passante du circuit. En dehors de cette gamme de réception, le signal est trop atténué et le dispositif de communication ne peut plus fonctionner. Dans le cas d'un circuit LC comportant un condensateur et une bobine, la fréquence de résonance est donnée par la formule :

$$f_0 = 1/2\ \pi\ \sqrt{LC}$$

Le circuit modifié présente une nouvelle fréquence de résonance f' suffisamment éloignée de fo pour qu'un signal émis dans la gamme de fréquence du dispositif RFID ne soit plus détecté, désactivant ainsi le dispositif de communication.

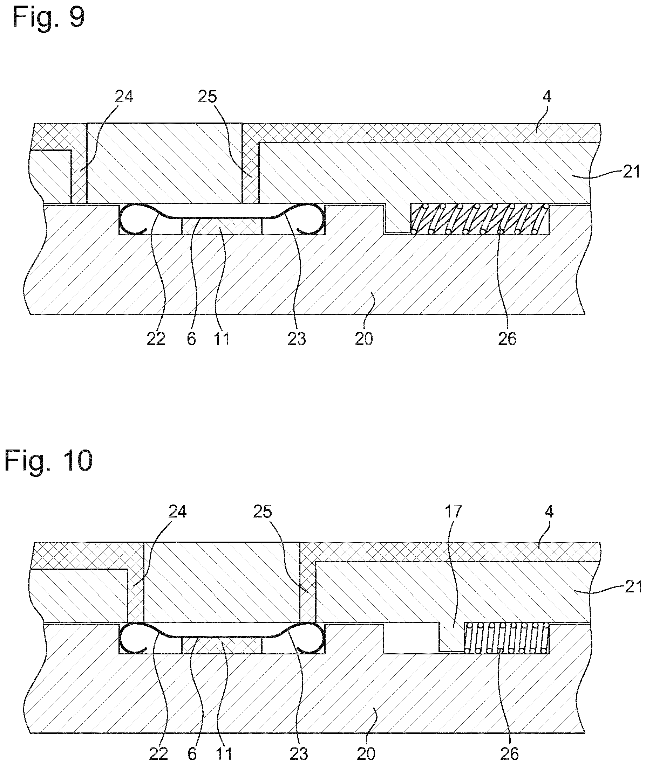

Les figures 9 et 10 représentent une coupe d'un détail d'un objet portable selon l'invention, en l'occurrence une montre dont on distingue le boitier 20. Une lunette 21, montée pivotante en référence au boitier 20, comporte un dispositif de communication en champ proche tel que ceux représentés schématiquement sur les figure 1 à 7 et comportant une antenne 4, un circuit électrique et une puce électronique. Des lames flexibles conductrices 22, 23 logées dans le boitier 20 sont agencées pour venir au contact de pattes 24, 25 du circuit électrique lorsque la lunette 21, qui est ici l'organe de commande, est dans la position active représentée à la figure 10. Les lames flexibles 22, 23 forment une branche de dérivation 6 qui peut éventuellement comporter un composant 11 supplémentaire, en particulier un condensateur, une inductance ou une résistance. Lorsque l'organe de commande est dans la position passive représentée à la figure 9, la branche de dérivation 6 est connectée au circuit électrique via les pattes 23, 24 ce qui a pour effet d'en modifier la fréquence de résonance et de rendre le dispositif inactif. L'objet portable comporte également un moyen de rappel élastique 26 agencé pour ramener automatiquement l'organe de commande dans sa position passive et ainsi sécuriser le dispositif.

Le mode de réalisation d'un interrupteur des figures 9 et 10 n'est qu'un exemple non limitatif. L'homme du métier saura adapter d'autres dispositifs pour réaliser cette fonction. En particulier, l'organe de commande peut être un bouton poussoir ou bien la couronne de commande. Dans une configuration intéressante, l'interrupteur galvanique décrit précédemment peut être remplacé par un interrupteur magnétique à lame souple de type interrupteur Reed. Dans ce cas, l'objet portable comporte également un aimant permanent mobile en référence à l'interrupteur Reed 26, le déplacement relatif de l'interrupteur Reed et de l'aimant étant provoqué par le déplacement de l'organe de commande. Comme précédemment, l'ensemble est agencé pour que le déplacement de l'organe de commande, entre ses positions prédéfinies, modifie l'état de l'interrupteur Reed.

Dans une variante de réalisation non représentée, la montre comporte un interrupteur Reed principal ainsi qu'un un interrupteur de sécurité supplémentaire destiné à se prémunir du risque d'une connexion frauduleuse à l'aide d'un lecteur et d'un aimant placé par un tiers malveillant à proximité de la montre. Cet aimant de sécurité est également un interrupteur Reed. Contrairement à l'interrupteur Reed principal, l'interrupteur de sécurité n'est pas associé à un aimant permanent car il n'est pas destiné à changer d'état lors d'un fonctionnement normal mais uniquement en cas d'attaque.

L'interrupteur de sécurité peut, par exemple, être monté en série avec l'interrupteur Reed principal. L'interrupteur de sécurité est dans ce cas un interrupteur de type NF, normalement fermé, c'est-à-dire qu'il est fermé en l'absence de champ magnétique et qu'il commute en position ouverte sous l'effet d'un champ magnétique. L'interrupteur Reed principal est de type NO, normalement ouvert, et fonctionne à l'inverse du précédent. En cas d'attaque à l'aide d'un aimant, l'interrupteur de sécurité et l'interrupteur principal commutent simultanément sous l'effet du champ magnétique extérieur, si bien que le dispositif de communication reste inactif. De préférence l'interrupteur Reed principal et l'interrupteur de sécurité sont disposés aussi proches que possible en veillant à ce que le déplacement de l'aimant permanent, commandant l'interrupteur principal, soit sans effet sur l'interrupteur de sécurité.

L'homme du métier saura réaliser de multiples variations à partir des modes de réalisation présentés sans sortir du cadre des revendications. La position passive de l'organe de commande peut par exemple aussi bien correspondre à un état ouvert de l'interrupteur qu'à un état fermé.

Les montres selon l'invention, offrent une grande facilité d'usage et une meilleure sécurité que ceux pourvus des interrupteurs électroniques de l'art antérieur dont le changement d'état doit être commandé à l'avance depuis un appareil électronique extérieur, par exemple depuis un smartphone. Il est possible d'adapter facilement ce dispositif sécurisé de communication en champ proche sur tout type d'objet portable comme par exemple une carte à puce.

D'une façon avantageuse, le dispositif de sécurité proposé par l'invention permet de réduire les risques de communication frauduleuse car le dispositif peut être activé alors que la montre se trouve déjà à proximité et sous l'influence magnétique du lecteur avec lequel il est destiné à communiquer, si bien que la communication s'établit instantanément avec le lecteur cible dès que l'organe de commande est déplacé dans la position active. De plus, le retour automatique de l'organe de commande dans sa position passive sécurise immédiatement le dispositif dès que l'opération souhaitée a été effectuée et alors même que l'objet portable se trouve encore dans la portée du champ magnétique du lecteur cible.

Par ailleurs, le moyen de verrouillage mécanique proposé par l'invention donne à l'utilisateur la maîtrise de la sécurité du dispositif de communication en champ proche et lui apporte la confiance qui faisait jusqu'à présent défaut dans l'utilisation de cette technologie.

## Revendications

1. Objet portable comportant un dispositif de communication en champ proche, le dispositif de communication comportant une puce électronique (1) munie de deux bornes (2, 3) connectées à un circuit électrique comportant une antenne (4) et un filtre (5), le dispositif de communication étant agencé pour recevoir et émettre à une fréquence définie correspondant à la fréquence de résonance du circuit électrique, l'objet portable comportant un organe de commande apte à être déplacé entre deux positions prédéfinies, à savoir une position active dans laquelle le dispositif de communication est activé et une position passive dans laquelle le dispositif de communication est désactivé, le circuit électrique comportant une branche de dérivation (6) munie d'un interrupteur (7) apte à commuter entre un état ouvert et un état fermé en réponse à un déplacement de l'organe de commande de l'une à l'autre de ses positions prédéfinies en provoquant une modification de la fréquence de résonance du circuit, **caractérisé en ce que** l'objet portable est une montre, et **en ce qu'**il comporte une lunette pivotante (21) qui est l'organe de commande.

2. Objet portable comportant un dispositif de communication en champ proche, le dispositif de communication comportant une puce électronique (1) munie de deux bornes (2, 3) connectées à un circuit électrique comportant une antenne (4) et un filtre (5), le dispositif de communication étant agencé pour recevoir et émettre à une fréquence définie correspondant à la fréquence de résonance du circuit électrique, l'objet portable comportant un organe de commande apte à être déplacé entre deux positions prédéfinies, à savoir une position active dans laquelle le dispositif de communication est activé et une position passive dans laquelle le dispositif de communication est désactivé, le circuit électrique comportant une branche de dérivation (6) munie d'un interrupteur (7) apte à commuter entre un état ouvert et un état fermé en réponse à un déplacement de l'organe de commande de l'une à l'autre de ses positions prédéfinies en provoquant une modification de la fréquence de résonance du circuit, **caractérisé en ce que** l'objet portable est une montre, et **en ce qu'**il comporte une couronne ou un poussoir de montre, qui est l'organe de commande.

3. Objet portable selon la revendication 1, **caractérisé en ce que** le circuit électrique comporte un pont (8) parallèle à l'antenne (4), portant un condensateur (9).

4. Objet portable selon la revendication précédente, **caractérisé en ce que** l'antenne (4) et le pont (8) sont connectés aux bornes (2, 3) de la puce électronique (1).

5. Objet portable selon l'une des revendications précédentes, **caractérisé en ce que** la branche de dérivation (6) est connectée aux bornes (2, 3) de la puce électronique (1).

6. Objet portable selon l'une des revendications 3 à 5, **caractérisé en ce que** le pont (8) comporte un deuxième composant (10) monté en série avec le condensateur (9), et **en ce que** la branche de dérivation (6) est montée en parallèle du deuxième composant (10) en étant connectée d'un côté à une borne (2) de la puce électronique (1) et de l'autre entre les deux composants du pont (8).

7. Objet portable selon la revendication précédente, **caractérisé en ce que** le deuxième composant (10) est un condensateur ou une inductance.

8. Objet portable selon l'une des revendications précédentes, **caractérisé en ce que** la branche de dérivation (6) comporte en outre un composant (11) monté en série avec l'interrupteur (7), le composant (11) étant un condensateur, une inductance ou une résistance.

9. Objet portable selon la revendication 3, **caractérisé en ce qu'**une inductance (12) est montée entre une borne (3) de la puce électronique (1) et le condensateur (9), et **en ce que** la branche de dérivation (6) est montée parallèle à l'inductance (12).

10. Objet portable selon l'une des revendications précédentes, **caractérisé en ce que** l'interrupteur (7) est un interrupteur Reed et **en ce que** l'objet portable comporte un aimant permanent mobile en référence à l'interrupteur Reed et apte à modifier l'état de l'interrupteur Reed en réponse à un déplacement de l'organe de commande.

11. Objet portable selon la revendication 10, **caractérisé en ce qu'**il comporte un interrupteur de sécurité agencé pour changer d'état simultanément avec l'interrupteur Reed en présence d'un champ magnétique extérieur.

12. Objet portable selon l'une des revendications précédentes, **caractérisé en ce qu'**il comporte un moyen de rappel élastique (26) agencé pour ramener automatiquement l'organe de commande de la position active vers la position passive.

**Patentansprüche**

1. Tragbarer Gegenstand, der eine Nahfeldverbindungsvorrichtung umfasst, wobei die Verbindungsvorrichtung einen elektronischen Chip (1) umfasst, der mit zwei Klemmen (2, 3) versehen ist, die an einen Stromkreis angeschlossen sind, der eine Antenne (4) und einen Filter (5) umfasst, wobei die Verbindungsvorrichtung angeordnet ist, um mit einer definierten Frequenz, die der Resonanzfrequenz des Stromkreises entspricht, zu empfangen und zu senden, wobei der tragbare Gegenstand ein Steuerorgan umfasst, das geeignet ist, zwischen zwei vordefinierten Positionen verschoben zu werden, nämlich einer aktiven Position, in der die Verbindungsvorrichtung aktiviert ist, und einer passiven Position, in der die Verbindungsvorrichtung deaktiviert ist, wobei der Stromkreis einen Nebenschlussarm (6) umfasst, der mit einem Schalter (7) versehen ist, der geeignet ist, zwischen einem geöffneten Zustand und einem geschlossenen Zustand in Antwort auf eine Verschiebung des Steuerorgans von der einen in die andere seiner vordefinierten Positionen umzuschalten, indem eine Änderung der Resonanzfrequenz des Stromkreises hervorgerufen wird, **dadurch gekennzeichnet, dass** der tragbare Gegenstand eine Uhr ist, und dadurch, dass er eine drehbare Lünette (21) umfasst, die das Steuerorgan ist.

2. Tragbarer Gegenstand, der eine Nahfeldverbindungsvorrichtung umfasst, wobei die Verbindungsvorrichtung einen elektronischen Chip (1) umfasst, der mit zwei Klemmen (2, 3) versehen ist, die an einen Stromkreis angeschlossen sind, der eine Antenne (4) und einen Filter (5) umfasst, wobei die Verbindungsvorrichtung angeordnet ist, um mit einer definierten Frequenz, die der Resonanzfrequenz des Stromkreises entspricht, zu empfangen und zu senden, wobei der tragbare Gegenstand ein Steuerorgan umfasst, das geeignet ist, zwischen zwei vordefinierten Positionen verschoben zu werden, nämlich einer aktiven Position, in der die Verbindungsvorrichtung aktiviert ist, und einer passiven Position, in der die Verbindungsvorrichtung deaktiviert ist, wobei der Stromkreis einen Nebenschlussarm (6) umfasst, der mit einem Schalter (7) versehen ist, der geeignet ist, zwischen einem geöffneten Zustand und einem geschlossenen Zustand in Antwort auf eine Verschiebung des Steuerorgans von der einen in die andere seiner vordefinierten Positionen umzuschalten, indem eine Änderung der Resonanzfrequenz des Stromkreises hervorgerufen wird, **dadurch gekennzeichnet, dass** der tragbare Gegenstand eine Uhr ist, und dadurch, dass er eine Krone oder einen Uhrendrücker umfasst, die bzw. der das Steuerorgan ist.

3. Tragbarer Gegenstand nach Anspruch 1, **dadurch gekennzeichnet, dass** der Stromkreis eine Brücke (8) parallel zu der Antenne (4) umfasst, die einen Kondensator (9) trägt.

4. Tragbarer Gegenstand nach dem vorstehenden Anspruch, **dadurch gekennzeichnet, dass** die Antenne (4) und die Brücke (8) an die Klemmen (2, 3) des elektronischen Chips (1) angeschlossen sind.

5. Tragbarer Gegenstand nach einem der vorstehenden Ansprüche, **dadurch gekennzeichnet, dass** der Nebenschlussarm (6) an die Klemmen (2, 3) des elektronischen Chips (1) angeschlossen ist.

6. Tragbarer Gegenstand nach einem der Ansprüche 3 bis 5, **dadurch gekennzeichnet, dass** die Brücke (8) ein zweites Bauteil (10) umfasst, das in Serie mit dem Kondensator (9) montiert ist, und dadurch, dass der Nebenschlussarm (6) in Parallelschaltung zu dem zweiten Bauteil (10) montiert ist, indem er auf einer Seite an eine Klemme (2) des elektronischen Chips (1) und auf der anderen zwischen den zwei Bauteilen der Brücke (8) angeschlossen wird.

7. Tragbarer Gegenstand nach dem vorstehenden Anspruch, **dadurch gekennzeichnet, dass** das zweite Bauteil (10) ein Kondensator oder ein Induktor ist.

8. Tragbarer Gegenstand nach einem der vorstehenden Ansprüche, **dadurch gekennzeichnet, dass** der Nebenschlussarm (6) weiter ein Bauteil (11) umfasst, das in Serie mit dem Schalter (7) montiert ist, wobei das Bauteil (11) ein Kondensator, ein Induktor oder ein Widerstand ist.

9. Tragbarer Gegenstand nach Anspruch 3, **dadurch gekennzeichnet, dass** ein Induktor (12) zwischen einer Klemme (3) des elektronischen Chips (1) und dem Kondensator (9) montiert ist, und dadurch, dass der Nebenschlussarm (6) in Parallelschaltung zu dem Induktor (12) montiert ist.

10. Tragbarer Gegenstand nach einem der vorstehenden Ansprüche, **dadurch gekennzeichnet, dass** der Schalter (7) ein Reedschalter ist, und dadurch, dass der tragbare Gegenstand einen Permanentmagneten umfasst, der in Bezug auf den Reedschalter beweglich ist und geeignet ist, den Zustand des Reedschalters in Antwort auf eine Verschiebung des Steuerorgans zu ändern.

11. Tragbarer Gegenstand nach Anspruch 10, **dadurch gekennzeichnet, dass** er einen Sicherheitsschalter umfasst, der angeordnet ist, um gleichzeitig mit dem Reedschalter bei Vorhandensein eines äußeren Magnetfelds den Zustand zu wechseln.

12. Tragbarer Gegenstand nach einem der vorstehenden Ansprüche, **dadurch gekennzeichnet, dass** er ein elastisches Rückzugmittel (26) umfasst, das angeordnet ist, um das Steuerorgan automatisch von der aktiven Position in die passive Position zurückzustellen.

**Claims**

1. Portable object, comprising a near-field communication device, the communication device comprising an electronic chip (1) provided with two terminals (2, 3) connected to an electrical circuit comprising an antenna (4) and a filter (5), the communication device being provided in order to receive and transmit at a defined frequency corresponding to the resonance frequency of the electrical circuit, the portable object comprising a control element which is able to be displaced between two predefined positions, i.e. an active position in which the communication device is activated and a passive position in which the communication device is deactivated, the electrical circuit comprising a bypass branch (6) provided with a switch (7) which is able to switch between an open state and a closed state in response to a displacement of the control element from one to the other of its predefined positions causing a modification in the resonance frequency of the electrical circuit, **characterised in that** the portable object is a watch, and **in that** it comprises a pivoting bezel (21) which is the control element.

2. Portable object, comprising a near-field communication device, the communication device comprising an electronic chip (1) provided with two terminals (2, 3) connected to an electrical circuit comprising an antenna (4) and a filter (5), the communication device being provided in order to receive and transmit at a defined frequency corresponding to the resonance frequency of the electrical circuit, the portable object comprising a control element which is able to be displaced between two predefined positions, i.e. an active position in which the communication device is activated and a passive position in which the communication device is deactivated, the electrical circuit comprising a bypass branch (6) provided with a switch (7) which is able to switch between an open state and a closed state in response to a displacement of the control element from one to the other of its predefined positions causing a modification in the resonance frequency of the electrical circuit, **characterized in that** the portable object is a watch, and **in that** it comprises a watch crown or a push button which is the control element.

3. Potable object according to claim 1 or 2, **characterised in that** the electrical circuit comprises a bridge (8) in parallel with the antenna (4) and carrying a capacitor (9).

4. Portable object according to claim 3, **characterised in that** the antenna (4) and the bridge (8) are connected to the terminals (2, 3) of the electronic chip (1).

5. Portable object according to one of the preceding claims, **characterised in that** the bypass branch (6) is connected to the terminals (2, 3) of the electronic chip (1).

6. Portable object according to one of the claims 3 to 5, **characterised in that** the bridge (8) comprises a second component (10), mounted in series with the capacitor (9), and **in that** the bypass branch (6) is mounted in parallel to the second component (10) by being connected on one side to one terminal (2) of the electronic chip (1) and on the other between the two components of the bridge (8).

7. Portable object according to claim 6, **characterised in that** the second component (10) is a capacitor or an inductor.

8. Portable object according to one of the preceding claims, **characterised in that** the bypass branch (6) comprises furthermore a component (11) mounted in series with the switch (7), the component (11) being a capacitor, an inductor or a resistor.

9. Portable object according to claim 3, **characterised in that** an inductor (12) is mounted between one terminal (3) of the electronic chip (1) and the capacitor (9), and **in that** the bypass branch (6) is mounted parallel to the inductor (12).

10. Portable object according to one of the preceding claims, **characterised in that** the switch (7) is a Reed switch, and **in that** the portable object comprises a permanent magnet which is mobile relative to the Reed switch and able to modify the state of the Reed switch in response to a displacement of the control element.

11. Portable object according to claim 10, **characterised in that** it comprises a security switch provided to change state simultaneously with the Reed switch in the presence of an external magnetic field.

12. Portable object according to one of the preceding claims, **characterised in that** it comprises elastic restoring means (26) provided to return the control element automatically from the active position to the passive position.

# Fig. 1

# Fig. 2

# Fig. 3

**Fig. 4**

**Fig. 5**

**Fig. 6**

## Fig. 7

IC

R

$C_{normale}$

$L_{normale}$

1 2 8 9 3 6 7 12 4 5

## Fig. 8

Gain

$f_0$

Gamme de réception

f'

f

Fréquence centrale
de réception

Fig. 9

Fig. 10

## RÉFÉRENCES CITÉES DANS LA DESCRIPTION

**Documents brevets cités dans la description**

- EP 603721 A
- EP 974878 A
- CH 690525
- CH 704583
- US 20160188925 A
- US 6685096 B1
- WO 2011067543 A1
- EP 1876556 A1